# EUROPEAN PATENT SPECIFICATION

(11) **EP 4 170 788 B1**
(45) Date of publication and mention of the grant of the patent: **05.03.2025**
(21) Application number: 21203601.6
(22) Date of filing: 20.10.2021
(51) Int. Cl.: H01M 50/209, H01M 50/249, H01M 50/264, H01M 50/291, H01M 10/613, H01M 10/625, H01M 10/647, H01M 10/6556, H01M 10/6557

(54) **BATTERY FRAME, BATTERY PACK, ELECTRIC VEHICLE, METHOD OF ASSEMBLING A BATTERY FRAME, AND METHOD OF ASSEMBLING A BATTERY PACK**
BATTERIERAHMEN, BATTERIEPACK, ELEKTROFAHRZEUG, VERFAHREN ZUR MONTAGE EINES BATTERIERAHMENS UND VERFAHREN ZUR MONTAGE EINES BATTERIEPACKS
CADRE DE BATTERIE, BLOC-BATTERIE, VÉHICULE ÉLECTRIQUE, PROCÉDÉ D'ASSEMBLAGE D'UN CADRE DE BATTERIE, ET PROCÉDÉ D'ASSEMBLAGE D'UN BLOC-BATTERIE

(43) Date of publication of application: 26.04.2023
(73) Proprietor: Samsung SDI Co., Ltd., Yongin-si, Gyeonggi-do 17084 (KR)
(72) Inventor: Pucher, Matthias, 8403 Lebring (AT)
(74) Representative: Gulde & Partner

(56) References cited:
- EP-A1- 3 664 186
- US-A1- 2009 142 650

## Description

### Field of the Disclosure

The present disclosure relates to a battery frame. The present disclosure also relates to a battery pack, to an electric vehicle, to a method of assembling a battery frame, and to a method of assembling a battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules into the battery pack may be achieved by providing a carrier framework and by positioning the battery modules thereon. Fixing the battery cells or battery modules may be achieved by fitted depressions in the carrier framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The battery framework is usually made of aluminum or an aluminum alloy to lower the total weight of the construction. The carrier framework for a battery pack is also referred to as "battery frame", or simply "frame" or "rack". The mechanical structure of a typical battery for an electric vehicle, a hybrid electric vehicle or a plug-in hybrid vehicle is provided by the battery frame.

Typical battery housing concepts and/or battery frame concepts often employ a certain number of aluminum extrusion profiles, which are used as longitudinal beams and/or crossbeams in order to achieve a rigid mechanical structure of the battery frame and/or the battery housing and thus the entire battery pack. Those parts are often used for the mechanical support and also for cooling of the battery cells. Due to constant pressure to reduce overall costs and package space, it is common to integrate the rows of stacked battery cells as so called "battery cell stacks" directly between the "beams", i.e., the longitudinal beams and the crossbeams, such as aluminum extrusion profiles. Thereby, the battery cells themselves are mostly joined to the beams (carriers, profiles) via structural adhesive material.

Typically, the battery frame is sub- or pre-assembled, e.g., Aluminum (Al) extrusion profiles or steel sheet metal parts which are welded together to one unit, i.e., a single piece part, such as a casted Al-housing or a deep drawn steel tub. Alternatively, the battery frame comprises a plurality of single components which are to be assembled by the battery manufacturer in a pre-assembly process. However, irrespective of the battery frame the general assembly procedure of a battery system by the battery manufacturer comprises the step of installing a pre-assembled battery module, i.e., a cell stack arrangement or a row of stacked battery cells, in the battery frame. A recent and cost-efficient variant is to install a slightly over-pressed cell-stack row directly into an appropriate cell compartment in the battery frame which is called as "Cell to Pack".

The battery frames according to the prior art are not entirely modular. For example, it is not efficiently possible to utilize a large welded steel battery frame of an electric vehicle battery pack for a small plug-in hybrid battery pack. Thus, to construct the battery frame of differently dimensioned battery packs, individual components with specific part numbers, e.g., longitudinal beams and/or crossbeams defining the size of the frame and thus the battery pack needs to be manufactured for each type of battery pack. Especially if the mechanical structure is based on a casted Al housing or deep-drawn steel tub, it is necessary to produce a complete tooling. Furthermore, a casted Al housing is limited in size due to the required clamping force of a diecast machine.

Pre-assembled battery frames or single piece housings are relatively large which leads to considerable costs and/or difficulties regarding the logistics, e.g., shipping. Also, the handling in the production process itself is much more complex instead of having a small and lightweight battery frame or housing.

Joining technique for pre-assembled battery frames are spot- and/or laser-welding. For multimaterial-mix housings or battery frames comprising extrusion profiles and die-cast parts, a proper mechanic joining requires a structural gluing in combination with rivets, flow form screws etc. Such connections with structural adhesive material are sensitive and need to be monitored very accurately.

Further, to provide thermal control of the battery pack, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Typically, a liquid cooled battery pack with prismatic cells uses a sheet metal cooling plate or a partial integrated cooler which is attached to a bottom or top side of the cells. Bottom- and/ or top-side cooling concepts require appropriate extra space increases, e.g., the total height of the battery pack. Lateral cooling concepts are often not cost-effective.

EP 3 273 500 A1 discloses that crossbeams are mechanically coupled to a housing for a battery system. The housing comprises an aluminum ground plate that is welded to a battery frame, comprising two longitudinal extruded aluminum battery frame beams and two extruded aluminum battery frame crossbeams. A first longitudinal battery frame beam faces a second longitudinal battery frame beam and a first battery frame crossbeam faces a second battery frame crossbeam and thus the battery frame beams constitute a rectangular battery frame. The crossbeams are mounted into the battery frame using screws and snap fit attaching means. The crossbeams are screwed to a first battery frame beam, e.g., the first longitudinal battery frame beam or the first battery frame crossbeam, and a second battery frame beam opposing the first battery frame beam. Each of the crossbeams comprises two coolant ducts that terminate at two opposing ends of the crossbeam for being fluidly connectable with a coolant feed and return line.

US 2020/0148066 Al discloses an electric vehicle battery pack with a battery frame constructed with extruded aluminum side and cross members. Cross members may be affixed to side members with extruded aluminum brackets. Side members of differing lengths may be employed, to make battery pack battery frames of differing sizes in modular manner. Battery pack lids and bottom panels may be removably affixed to the battery frame such as with bolts, for improved serviceability. Any of the side members and/or cross members may have threaded bolt or screw holes machined therein after they are extruded. The bolt or screw holes may be machined in either one or both of the upper or lower surfaces of the side members and/or cross members, i.e., surfaces facing the lid or bottom layer, respectively, to allow the lid and/or bottom layer to be more easily and repeatably attached and removed.

EP 3 664 186 A1 discloses a battery module, which includes: a first battery cell assembly having at least one battery cell; a second battery cell assembly spaced apart from the first battery cell assembly by a predetermined distance and having at least one battery cell; a bottom plate configured to integrally support the second battery cell assembly and the first battery cell assembly; and a top plate disposed above the bottom plate to integrally cover the first battery cell assembly and the second battery cell assembly.

It is an object of the present invention to overcome or reduce at least some of the drawbacks of the prior art and to provide a battery pack and a battery frame for a battery pack, wherein the above-mentioned characteristics, i.e., amount of different required parts, manufacture costs, mechanical properties, manufacturability, and thermal control, are, at the same time, improved over the prior art.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery frame for providing structural support for a battery pack for retaining rows of stacked battery cells comprises: two longitudinal beams; and a plurality of crossbeams arranged between and connected to the longitudinal beams; wherein the plurality of crossbeams are arranged in parallel to each other and comprises two outer crossbeams and at least one inner crossbeam, wherein the at least one inner crossbeam is arranged between the outer crossbeams; wherein a retaining section for retaining one row of stacked battery cells is provided between any neighboring pair of crossbeams so that rows of stacked battery cells and the at least one inner crossbeam are alternately stackable between the two outer crossbeams; wherein each of the crossbeams is connected to the two longitudinal beams by a plurality of fasteners extending into a longitudinal direction of the crossbeams through the longitudinal beams and into the crossbeams.

According to another aspect of the present disclosure, a battery pack, comprises: at least two rows of stacked battery cells and a battery frame as described in the present disclosure; wherein the number of inner crossbeams equals the number of rows of stacked battery cells reduced by one; and wherein each of the rows of stacked battery cells is mounted between a pair of adjacent crossbeams.

Yet another aspect of the present disclosure refers to a vehicle using a power source comprising the battery pack as described in the present disclosure.

Yet another aspect of the present disclosure refers to a method of assembling a battery frame as described in the present disclosure, the method comprising the following steps: providing the two longitudinal beams and the plurality of crossbeams; arranging each of the crossbeams between the longitudinal beams so that a retaining section for retaining one row of stacked battery cells is provided between any neighboring pair of crossbeams so that rows of stacked battery cells and the at least one inner crossbeam are alternately stackable between the two outer crossbeams; and mechanically interconnecting the two longitudinal beams and the plurality of crossbeams with each other by a plurality of fasteners extending into a longitudinal direction of the crossbeams through the longitudinal beams and into the crossbeams.

Yet another aspect of the present disclosure refers to a method of assembling a battery pack according to the present disclosure, the method comprises the following steps: providing the plurality of crossbeams and the at least two rows of stacked battery cells; stacking the plurality of crossbeams and the at least two rows of stacked battery cells such that the inner crossbeams and the at least two rows of stacked battery cells are alternately stacked between the two outer crossbeams; providing the two longitudinal beams; and mechanically interconnecting the two longitudinal beams and the plurality of crossbeams with each other by the plurality of fasteners extending into a longitudinal direction of the crossbeams through the longitudinal beams and into the crossbeams.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a battery pack according to an embodiment.
- Fig. 2: illustrates a cross section of the battery pack according to Fig. 1.
- Fig. 3: illustrates a perspective view of a battery frame according to an embodiment.
- Fig. 4: illustrates a method of assembling the battery pack as illustrated in Fig. 1 according to an embodiment.
- Fig. 5: illustrates a method of assembling a battery pack according to another embodiment.
- Fig. 6: illustrates a method step of assembling a battery pack according to yet another embodiment.
- Fig. 7: illustrates a method of assembling a battery pack according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

The terminology used herein is for the purpose of describing particular embodiments only and is not intended to be limiting of the present invention. As used herein, the singular forms "a," "an," and "the" are intended to include the plural forms as well, unless the context clearly indicates otherwise. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

In the following, the terms "upper" and "lower" are defined with respect to the orientation of the illustrated subject-matter in the figures. If a Cartesian coordinate system is shown in a figure, the terms "upper" and "lower" are defined with respect to the x-axis of the coordinate system. For example, the upper cover is positioned at the upper part of the x-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e. g., rotated 90 degrees or at other orientations) and the spatially relative descriptors used herein should be interpreted accordingly.

Features of the inventive concept and methods of accomplishing the same may be understood more readily by reference to the following detailed description of embodiments and the accompanying drawings. Hereinafter, example embodiments will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5 % of the value centered on the value.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery frame for providing structural support for a battery pack for retaining rows of stacked battery cells comprises: two longitudinal beams and a plurality of crossbeams arranged between and connected to the longitudinal beams.

The crossbeams are arranged in parallel to each other and the plurality of crossbeams comprises two outer crossbeams and at least one inner crossbeam, wherein the at least one inner crossbeam is arranged between the outer crossbeams. Thus, the frame and its arrangement of crossbeams comprises, in that order, a first outer crossbeam, the at least one inner crossbeam, and another, second outer crossbeam. The longitudinal beams and the crossbeams define the shape of the battery frame.

A retaining section for retaining one row of stacked battery cells is provided between any neighboring pair of crossbeams. Any neighboring pair of crossbeams is arranged in a noncontacting manner so that any pair of neighboring crossbeams is arranged with a certain distance between the neighboring crossbeams of the pair. Thus, the arrangement of crossbeams provides the first outer crossbeam, a first retaining section, a first inner crossbeam, a second retaining section, optionally a second inner crossbeam, optionally a third retaining section, and so on, and the second outer crossbeam. Thus, the retaining sections and the crossbeams are alternatingly arranged. Therefore, the rows of stacked battery cells and the at least one inner crossbeam are alternately stackable between the two outer crossbeams.

Each of the crossbeams is connected to the two longitudinal beams by a plurality of fasteners to assemble the battery frame and the provide mechanical interconnections between the crossbeams and the longitudinal beams. This provides modularity, i.e., it is possible to manufacture by the same production line differently sized battery frames by adapting the size of the longitudinal beams, the size and/or number of crossbeams, and the number of fasteners. The modularity also improves the handling of individual components of a battery pack comprising the battery frame, since the individual components can be efficiently delivered to, and handled in, a production line for the manufacture the battery pack. The fasteners enable that a rows of stacked battery cells can be retained between the crossbeams by a load exerted by the longitudinal beams surrounding the retaining section and which are fastened by the fasteners to the crossbeams. Thus, adhesive material to join the longitudinal beams and the crossbeams together can be dispensed with.

The plurality of fasteners is arranged to extend into a longitudinal direction of the crossbeams through the longitudinal beams and into the crossbeams. I.e., the longitudinal beams comprise openings through which the fasteners can extend. Each of the crossbeams is extended in a longitudinal direction of the crossbeam, wherein the longitudinal direction can define the largest extension direction of the crossbeam. The fasteners have an elongated shape which elongates in the longitudinal direction to reach through the openings of the longitudinal beams into the crossbeams. The openings are arranged so that the fasteners can extend into the longitudinal direction of the crossbeams. Arranging the plurality of fasteners to extend into the longitudinal direction of the crossbeams enables an improved usage of construction space and/or of the volume of the longitudinal beams and of the crossbeams by consuming a minimal amount of construction space and/or volume of the longitudinal beams within which coolant distribution ducts are typically arranged and/or of the crossbeams within which cooling channels are typically arranged. Thus, thermal control can also be improved as the coolant distribution ducts can be constructed with less constraints than with any other arrangement of fasteners. The rows of stacked battery cells are to be retained between the crossbeams. This implies that the fasteners extending into the longitudinal direction of the crossbeams can exert a load, also called pre-tension or pre-load, on the rows of stacked battery cells in the longitudinal direction in an improved manner. This can contribute the mechanical integration of the rows of stacked battery cells into the retaining sections. Thus, this can reduce the amount of required parts and manufacture cost as the mechanical integration of the rows of stacked battery cells is improved and simplified. Building a battery frame and/or subsequently a battery pack according to the present disclosure increases the modularity and flexibility, while concurrently adding value on supplier side, respectively the part-costs and shipping costs are decreased. With the present invention, it becomes in particular possible to design a cost-effective and modular battery concept and/or battery frame concept with improved mechanical properties that enables an improved thermal control.

According to one embodiment, each of the crossbeams comprises two opposing crossbeam ends, i.e., in the longitudinal direction, each crossbeam extends between its oppositely arranged crossbeam ends. Each of the crossbeams comprises at each of the crossbeam ends at least one locking member adapted to receive one of the fasteners so that any of the crossbeam ends can the mounted to one of the longitudinal beams. Each of the locking members and each of the fasteners are adapted to fasten the crossbeam and the longitudinal beam through which the fastener extends. The fastener and the locking member can engage with each other in a form locking manner and/or in a load-carrying connecting manner. Optionally, the fastener and the locking member can be reversibly engageable with each other so that a damage-free disassembly of the battery frame is possible.

According to one embodiment, the fasteners comprise screws or bolts, and each of the locking members comprises a hole to receive one of the screws or bolts. In this embodiment, each of the locking members can comprise a blind hole or a through hole which is threaded so that the screw or bolt can engage with the locking member. This provides a cost-effective and reversibly mountable and dismountable battery frame. Alternatively, the fasteners comprise clip, pins and/or clamps which engage by an elastic or plastic deformation thereof with a corresponding locking member.

According to one embodiment, each of the crossbeams comprises a cooling channel extending along the longitudinal direction through the crossbeam to provide an efficient cooling of the rows of stacked battery cells which are to be arranged between and/or next to the crossbeams. Each of the crossbeams comprises two opposing crossbeam ends and, at each of the crossbeam ends, two locking members adapted to receive one of the fasteners, each. This enhances the mechanical properties of the battery frame and the possibility of exerting a load on a row of stacked battery cells when placed in a corresponding retaining section between the crossbeams. At each of the crossbeam ends, the cooling channel is arranged between the two locking members. This allows an effective and symmetric arrangement of the cooling channel which leads to homogeneously distributed cooling properties. The symmetric arrangement of fasteners leads to a homogeneous distribution of load so that the longitudinal beams can be mounted without being tilted due to asymmetrically distributed fasteners and a resulting torque.

According to one embodiment, the two longitudinal beams are arranged in parallel to each other, and each of the two longitudinal beams is elongated along an elongation direction being perpendicular to the longitudinal direction of the crossbeams to provide an effective arrangement of longitudinal beams and crossbeams. This implies, if the lengths of the longitudinal beams equal each other and the lengths of the crossbeams equal each other, that any of the retaining sections has a rectangular cross-section which facilitates the integration of the rows of stacked battery cells.

According to one embodiment, the longitudinal beams and/or the crossbeams are extruded aluminum, rolled steel or long fiber reinforced thermoplastics beams to provide cost-effective and efficiently manufacturable longitudinal beams and/or crossbeams.

According to one embodiment, the crossbeams are extruded beams, wherein the fasteners extend into extruded through holes of the crossbeams being the locking members of the crossbeams to provide cost-effective and efficiently manufacturable longitudinal beams and/or crossbeams. By providing the locking members by means of extruded through holes of the crossbeam, it is possible to manufacture efficiently differently-sized battery frames by providing crossbeams of a different length in their longitudinal direction for each of the differently-sized battery frames.

According to a second aspect of the present disclosure, a battery pack comprises: at least two rows of stacked battery cells; and the battery frame according to the present disclosure. Therein, the number of inner crossbeams equals the number of rows of stacked battery cells reduced by one. Therein, each of the rows of stacked battery cells is mounted between a pair of adjacent crossbeams. Thus, the rows of stacked battery cells and the crossbeams are arranged in an alternating manner. I.e., the arrangement of crossbeams and of rows of stacked battery cells provides, in that order, the first outer crossbeam, a first row of stacked battery cells, a first inner crossbeam, a second row of stacked battery cells, optionally a second inner crossbeam, optionally a third row of stacked battery cells, and so on, and the second outer crossbeam. The battery pack is particularly efficiently manufacturable. The arrangement of the fasteners can imply a load that is exerted by the longitudinal beams to the rows of stacked battery cells to improve and simplify the mechanical integration of the rows of stacked battery cells into the battery pack. The battery pack and its battery frame can comprise any of the above-mentioned optional features to achieve the corresponding effects.

According to a third aspect of the present disclosure a vehicle using a power source comprising the battery pack according to the present disclosure. The vehicle, its battery pack and its battery frame can comprise any of the above-mentioned optional features to achieve the corresponding effects.

According to a fourth aspect of the present disclosure, a method of assembling a battery frame according to the present disclosure comprising the following steps: providing the two longitudinal beams and the plurality of crossbeams; arranging each of the crossbeams between the longitudinal beams so that a retaining section for retaining one row of stacked battery cells is provided between any neighboring pair of crossbeams so that rows of stacked battery cells and the at least one inner crossbeam are alternately stackable between the two outer crossbeams; and mechanically interconnecting the two longitudinal beams and the plurality of crossbeams with each other by a plurality of fasteners extending into a longitudinal direction of the crossbeams through the longitudinal beams and into the crossbeams. The above-mentioned method steps can be performed in any suitable order. I.e., it is possible that the method steps are performed in the order as described above. For example, it is equivalently possible that, in the following order, a first longitudinal beam and the crossbeams are provided, the crossbeams are arranged next to the first longitudinal beam so that a retaining section for retaining one row of stacked battery cells is provided between any neighboring pair of crossbeams so that rows of stacked battery cells and the at least one inner crossbeam are alternately stackable between the two outer crossbeams, the first longitudinal beams and the plurality of crossbeams are mechanically interconnected with each other by a plurality of fasteners extending into the longitudinal direction of the crossbeams through the first longitudinal beam and into the crossbeams, a second longitudinal beam is provided, the second longitudinal beam is arranged next to the crossbeams oppositely to the first crossbeam, and the second longitudinal beam is mechanically connected with crossbeams by a plurality of fasteners extending into the longitudinal direction of the crossbeams through the second longitudinal beam and into the crossbeams. The method has the advantage that it is performable to efficiently assemble a plurality of differently-sized battery frames by the very same method by providing differently-sized longitudinal beams, differently-sized crossbeams and/or a different number of crossbeams.

According to a fifth aspect of the present disclosure, a method of assembling a battery pack according to the present disclosure comprises the following steps: providing the plurality of crossbeams and the at least two rows of stacked battery cells; stacking the plurality of crossbeams and the at least two rows of stacked battery cells such that the inner crossbeams and the at least two rows of stacked battery cells are alternately stacked between the two outer crossbeams; providing the two longitudinal beams; and mechanically interconnecting the two longitudinal beams and the plurality of crossbeams with each other by the plurality of fasteners extending into a longitudinal direction of the crossbeams through the longitudinal beams and into the crossbeams. The above-mentioned method steps can be performed in any suitable order. The method has the advantage that it is performable to efficiently assemble a plurality of differently-sized battery packs by the very same method by providing differently-sized longitudinal beams, differently-sized crossbeams and rows of stacked battery cells, and/or a different number of crossbeams and of rows of stacked battery cells. Stacking the plurality of crossbeams and the at least two rows of stacked battery cells such that the inner crossbeams and the at least two rows of stacked battery cells are alternately stacked between the two outer crossbeams leads to a pre-assembled cell stack arrangement, i.e., a pre-assembled battery module. The method basically provides that the longitudinal beams as structural parts will be built around rows of cell stacks and can be called "Pack to Cell".

According to one embodiment, a method of assembling a battery pack according to the present disclosure comprises the following steps: assembling a battery frame using the method of assembling a battery frame according to the fourth aspect; providing a plurality of rows of stacked battery cells; and arranging one of the rows of stacked battery cells in each of the retaining sections provided by the battery frame. According to this aspect, the battery frame is pre-assembled. Optionally, subsequently to arranging one of the rows of stacked battery cells in each of the retaining sections provided by the battery frame, it is possible to increase the load exerted by longitudinal beams to the rows of stacked battery cells by further fastening the fasteners, i.e., increasing the load by means of the fasteners. E.g., if the fasteners comprise screws and/or bolts, it is possible to increase the load exerted by longitudinal beams to the rows of stacked battery cells by increasing the torque which is used to fasten the fasteners. The above-mentioned method steps can be performed in any suitable order. The method has the advantage that it is performable to efficiently assemble a plurality of differently-sized battery packs by the very same method by providing differently-sized longitudinal beams, differently-sized crossbeams and rows of stacked battery cells, and/or a different number of crossbeams and rows of stacked battery cells.

According to one embodiment, a first battery pack and a second battery pack is assembled; wherein the first battery pack and the second battery pack are assembled according to the present disclosure; wherein the first battery pack and the second battery pack are assembled at the same production line; and wherein the first battery pack has a different size compared to the second battery pack. This is possible by providing differently-sized longitudinal beams, differently-sized crossbeams and rows of stacked battery cells, and/or a different number of crossbeams and rows of stacked battery cells for the first battery pack and for the second battery pack.

According to one embodiment, the first battery pack comprises a different number of crossbeams and longitudinal beams with different lengths compared to the crossbeams and longitudinal beams of the second battery pack. This embodiment comprises differently-shaped battery packs with a different number of rows of stacked battery cells and a different size of the longitudinal beam in elongation direction.

According to one embodiment, the first battery pack comprises crossbeams with different lengths compared to the crossbeams of the second battery pack. This embodiment comprises differently-shaped battery packs with the same number of rows of stacked battery cells and the same size of the longitudinal beam in elongation direction, but with a different size in the longitudinal direction of the cross-beams. Thus, each of the rows of stacked battery cells of the first battery system can comprise a different number of battery cells than a row of stacked battery cells of the second battery system.

### Specific Embodiments

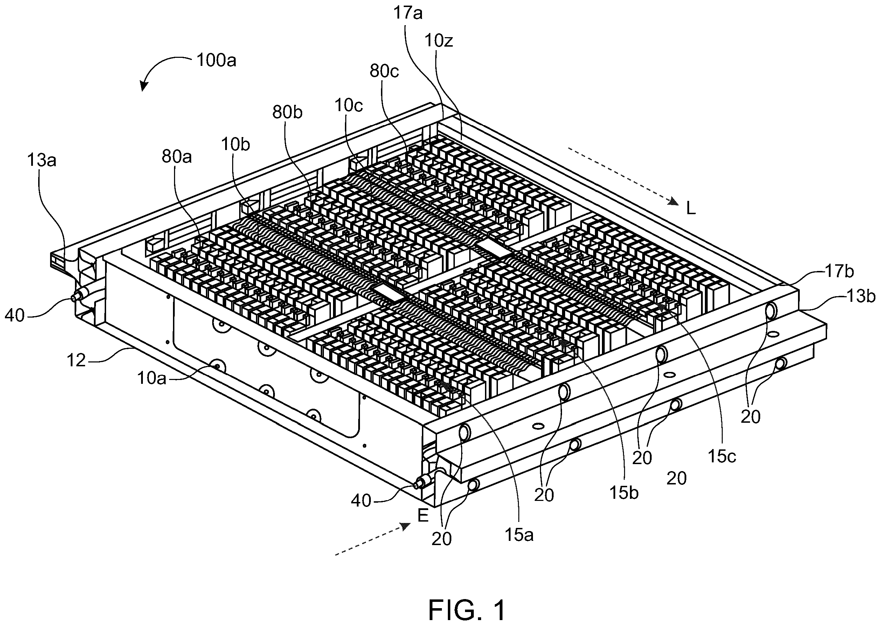

Fig. 1 illustrates a perspective view of a battery pack 100a according to an embodiment. Fig. 1 shows the battery pack 100a in a mounted state, i.e., a battery frame 12 and a plurality of rows of stacked battery cells 80a, 80b, 80c are assembled.

The battery pack 100a comprises the plurality of rows of stacked battery cells 80a, 80b, 80c, namely three rows of stacked battery cells 80a, 80b, 80c in the shown embodiment. Any other number of stacked battery cells 80a, 80b, 80c larger than one is possible. The battery pack 100a comprises the battery frame 12. The battery frame 12 is adapted to providing structural support for the battery pack 100a for retaining the rows of stacked battery cells 80a, 80b, 80c.

The battery frame 12 comprises two longitudinal beams 13a, 13b and a plurality of crossbeams 10a, 10b, 10c, 10z arranged between and connected to the longitudinal beams 13a, 13b.

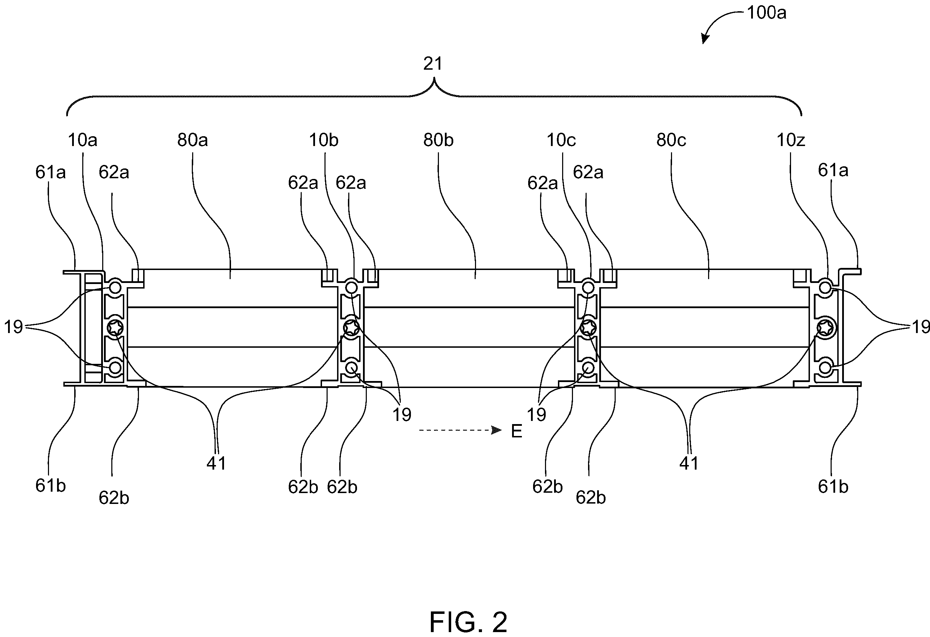

The crossbeams 10a, 10b, 10c, 10z are arranged in parallel to each other and the plurality of crossbeams 10a, 10b, 10c, 10z comprises two outer crossbeams 10a, 10z and, in this embodiment, two inner crossbeam 10b, 10c. The inner crossbeams 10b, 10c are arranged between the outer crossbeams 10a, 10z. The crossbeams 10a, 10b, 10c, 10z and their functioning are further detailed with reference to Fig. 2.

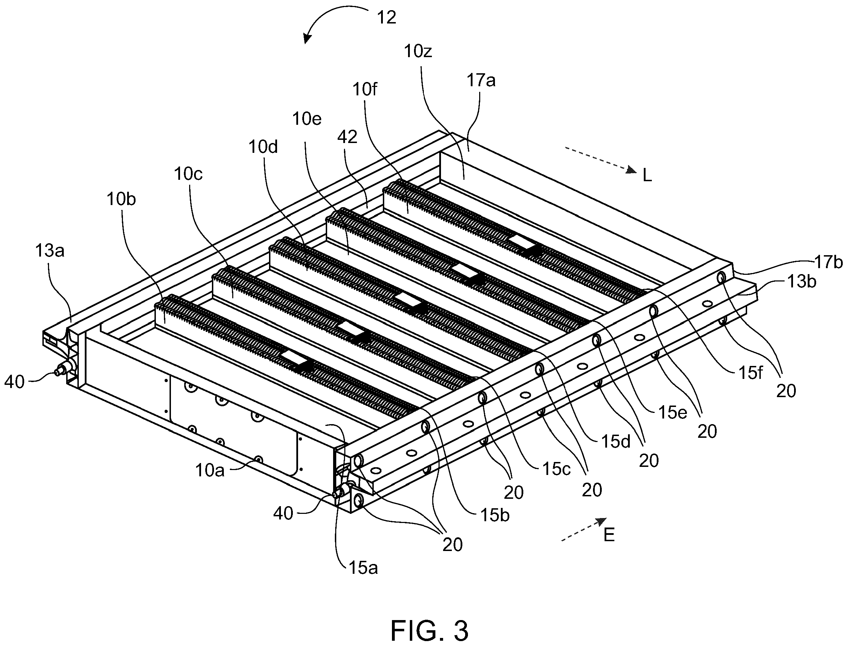

It is possible that a battery pack 100a, 100b comprises a different number of crossbeams 10a, 10b, 10c, 10z and/or differently-sized longitudinal beams 13a, 13b to provide a differently sized shape of the battery frame 12 (see, e.g., Figs. 3, 6 and 7 and the description thereof below).

As illustrated in Fig. 1, a retaining section 15a, 15b, 15c for retaining one row of stacked battery cells 80a, 80b, 80c is provided between any neighboring pair of crossbeams 10a, 10b, 10c, 10z so that rows of stacked battery cells 80a, 80b, 80c and the crossbeams 10b, 10c are alternately stacked between the two outer crossbeams 10a, 10z. The retaining sections 15a, 15b, 15c provide compartments to retain the rows of stacked battery cells 80a, 80b, 80c. Thus, the length of each of the crossbeams 10a, 10b, 10c, 10z in a longitudinal direction L pointing from one longitudinal beam 13a to the other longitudinal beam 13b matches the length of the rows of stacked battery cells 80a, 80b, 80c so that the rows of stacked battery cells 80a, 80b, 80c can be arranged in the retaining sections 15a, 15b, 15c and retained therein. The longitudinal direction L of the crossbeams 10a, 10b, 10c, 10d, 10z is indicated in the figures by a dashed arrow.

The two longitudinal beams 13a, 13b are arranged in parallel to each other, and each of the two longitudinal beams 13a, 13b is elongated along an elongation direction E being perpendicular to the longitudinal direction L of the crossbeams 10a, 10b, 10c, 10z. I.e., the crossbeams 10a, 10b, 10c, 10z and the two longitudinal beams 13a, 13b are arranged perpendicular to each other. Thus, each of the retaining sections 15a, 15b, 15c has a rectangular cross-section to retain the rows of stacked battery cells 80a, 80b, 80c. The length of the two longitudinal beams 13a, 13b in the elongation direction L pointing from one outer crossbeam 10a to the other outer crossbeam 10z matches the sum of the widths of the crossbeams 10a, 10b, 10c, 10z and of the rows of stacked battery cells 80a, 80b, 80c.

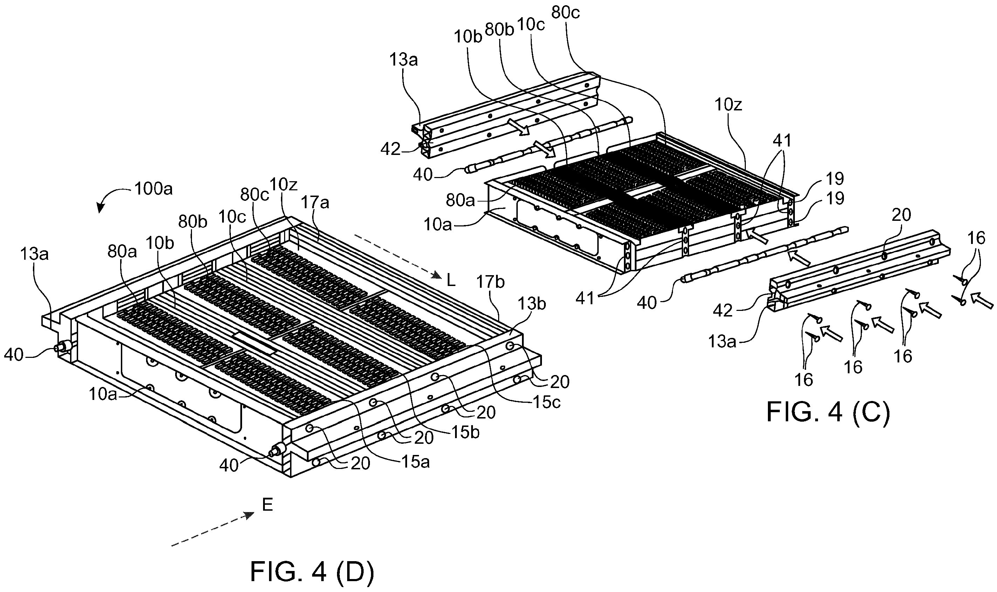

Each of the crossbeams 10a, 10b, 10c, 10z is connected to the two longitudinal beams 13a, 13b by a plurality of fasteners 16 (not indicated in Fig. 1, see Fig. 4 (C)) extending into the longitudinal direction L of the crossbeams 10a, 10b, 10c, 10z through the longitudinal beams 13a, 13b and into the crossbeams 10a, 10b, 10c, 10d, 10z. The longitudinal beams 13a, 13b comprise openings 20 through which the fasteners 16 extend. The openings 20 are arranged so that the fasteners 16 can extend into the longitudinal direction L of the crossbeams 10a, 10b, 10c, 10z and into the crossbeams 10a, 10b, 10c, 10z. I.e., for each of the crossbeams 10a, 10b, 10c, 10z, each of the longitudinal beams 13a, 13b comprises two openings 20 arranged to match with the position of crossbeams 10a, 10b, 10c, 10z and their locking members 19 (see Fig. 2).

Each of the crossbeams 10a, 10b, 10c, 10z comprises two opposing crossbeam ends 17a, 17b (for a clear illustration, only the two opposing ends 17a, 17b of the outer crossbeam 10z is indicated). In the longitudinal direction L, each of the crossbeam 10a, 10b, 10c, 10z extends between its oppositely arranged crossbeam ends 17a, 17b. The longitudinal beams 13a, 13b are mounted to the opposing ends 17a, 17b of the crossbeams 10a, 10b, 10c, 10z as further explained with reference to Fig. 3.

The battery pack 100a comprises two coolant distribution ducts 40 to allow a coolant fluid to flow via the coolant distribution ducts 40 through cooling channels 41 of the crossbeams 10a, 10b, 10c, 10z (see Fig. 2) to cool the crossbeams 10a, 10b, 10c, 10z and thereby the rows of stacked battery cells 80a, 80b, 80c.

The longitudinal beams 13a, 13b and the crossbeams 10a, 10b, 10c, 10z are extruded beams. The number of inner crossbeams 10b, 10c equals the number of rows of stacked battery cells 80a, 80b, 80c minus one. Each of the rows of stacked battery cells 80a, 80b, 80c is mounted between a pair of adjacent crossbeams 10a, 10b, 10c, 10z.

Fig. 2 illustrates a cross section of the battery pack 100a according to Fig. 1. The cross-sectional view of the battery pack 100a can also be considered as a side view of the battery pack 100a, wherein one or both of the longitudinal beams 13a, 13b is removed. Then, the side view of the battery pack 100a shows one of the opposing ends 17a, 17b of the crossbeams 10a, 10b, 10c, 10z. In this representation, the longitudinal direction L of the crossbeams 10a, 10b, 10c, 10z is perpendicular to the drawing plane, i.e., the longitudinal direction L points into or out of the drawing plane. The elongation direction E of the longitudinal beams 13a, 13b is indicated by a dashed arrow.

The crossbeams 10a, 10b, 10c, 10z and the rows of stacked battery cells 80a, 80b, 80c are stacked such that the inner crossbeams 10b, 10c and the rows of stacked battery cells 80a, 80b, 80c are alternately stacked between the two outer crossbeams 10a, 10z. The stacked arrangement of crossbeams 10a, 10b, 10c, 10z and rows of stacked battery cells 80a, 80b, 80c is referred to as a cell stack arrangement 21.

To provide support for lateral sides of the rows of stacked battery cells 80a, 80b, 80c by the crossbeams 10a, 10b, 10c, 10z, the crossbeams 10a, 10b, 10c, 10z comprises a plurality of flanges 61a, 61b, 62a, 62b. The flanges 61a, 61b, 62a, 62b may be arranged on either edge of the crossbeams 10a, 10b, 10c, 10z along the longitudinal direction L of the crossbeams 10a, 10b, 10c, 10z. Two flanges 61a, 61b, 62a, 62b of one side of each of the crossbeams 10a, 10b, 10c, 10z may have a distance two each other which encompasses a lateral side of a row of stacked battery cells 80a, 80b, 80c.

The outer flanges 61a, 61b of the outer crossbeams 10a, 10z, (i.e., the front- and rear end of the cell stack arrangement 21) are arranged and adapted, i.e., shaped, so provide a proper circumferential sealing flange for covers on top- and bottom side of the battery pack 100a. The outer crossbeams 10a, 10z can comprise integration members of connector- and cooling interfaces, e.g., an interface for a battery management system (not shown in the figures).

Each of the crossbeams 10a, 10b, 10c, 10z comprises an integrated cooling channel 41 arranged within the crossbeam 10a, 10b, 10c, 10z. The cooling channel 41 of each of the crossbeams 10a, 10b, 10c, 10z extends into the longitudinal direction L of the crossbeam 10a, 10b, 10c, 10z so that the coolant fluid can flow from one of the opposing ends 17a of the crossbeam 10a, 10b, 10c, 10z through the crossbeam 10a, 10b, 10c, 10z to the other of the opposing ends 17b of the crossbeam 10a, 10b, 10c, 10z. Each of the crossbeams 10a, 10b, 10c, 10z comprises locking members 19. The looking members 19 of each of the crossbeams 10a, 10b, 10c, 10z are through holes which extend into the longitudinal direction L of the crossbeam 10a, 10b, 10c, 10d from one of the opposing ends 17a of the crossbeam 10a, 10b, 10c, 10z through the crossbeam 10a, 10b, 10c, 10z to the other of the opposing ends 17b of the crossbeam 10a, 10b, 10c, 10z. The crossbeams 10a, 10b, 10c, 10z are made out of Al-extrusion profiles to simply and cost-effectively integrate cooling channels 41 and the extruded through holes being the locking members 19 of the crossbeams 10a, 10b, 10c, 10z into the crossbeams 10a, 10b, 10c, 10z.

The locking members 19 are arranged and adapted to receive the fasteners 16 so that the fasteners 16 extend into and engage with the locking members 19 of the crossbeams 10a, 10b, 10c, 10z. E.g., if the fasteners 16 comprises bolts and/or screws, the fasteners 16 can comprise a threaded section to engage with the fasteners 16.

Each of the crossbeams 10a, 10b, 10c, 10z comprises at each of the crossbeam ends 17a, 17b two locking members 19 adapted to receive one of the fasteners 16, each. The cooling channel 41 of each of the crossbeams 10a, 10b, 10c, 10z is arranged between the locking member 19 of the crossbeam 10a, 10b, 10c, 10z. This provides a symmetric distribution of load exerted by the fasteners 16. At each of the crossbeam ends 17a, 17b of each of the crossbeams 10a, 10b, 10c, 10z, the cooling channel 41 is arranged between the two locking members 19. This provides a central arrangement of the cooling channel 41 and thereby an improved cooling of the rows of stacked battery cells 80a, 80b, 80c arranged adjacent to and in contact with the crossbeams 10a, 10b, 10c, 10z.

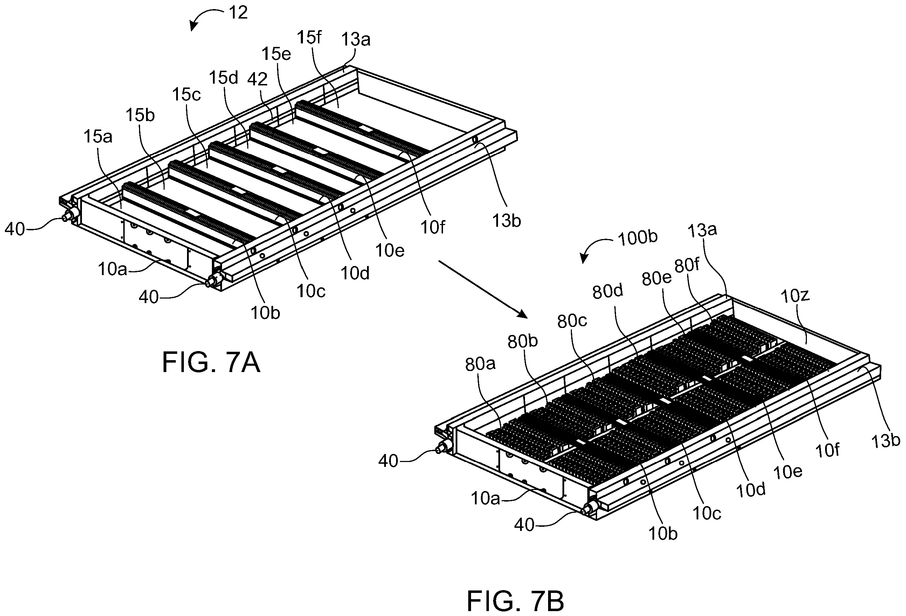

Fig. 3 illustrates a perspective view of a battery frame 12 according to an embodiment. The battery frame 12 is analogously constructed as the battery frame 12 of the battery pack 100a as illustrated in Fig. 1 with the difference that the battery frame 12 according to Fig. 2 comprises a different number of crossbeams 10a, 10b, 10c, 10d, 10e, 10f, 10z and thus comprises a different number of retaining sections 15a, 15b, 15c, 15d, 15e, 15f and different longitudinal beams 13a, 13b, compared to the battery frame 12 of the battery pack 100a of Fig. 1. Specifically, if the width of each of the rows of stacked battery cells 80a, 80b, 80c in Fig. 1, i.e., the size of the rows of stacked battery cells 80a, 80b, 80c in elongation direction E, corresponds to the width of each of the retaining sections 15a, 15b, 15c, 15d, 15e, 15f, the two longitudinal beams 13a, 13b of Fig. 3 are longer than the two longitudinal beams 13a, 13b in Fig. 1. Thus, a differently sized battery frame 12 is provided by compared to battery frame 12 the battery pack 100a as shown Fig. 1. The battery frame 12 as shown in Fig. 3 can be used to assemble a battery pack 100b as shown and described with reference to Fig. 7.

Each of the longitudinal beams 13a, 13b comprises a duct retainer 42 in the form of a recess of the longitudinal beams 13a, 13b to retain one of the coolant distribution ducts 40. The duct retainer 42 is arranged between the openings 20 and extends along the elongation direction E of the longitudinal beams 13a, 13b. The coolant distribution ducts 40 are mechanically connected with the cooling channels 41 of the crossbeams 10a, 10b, 10c, 10z to allow coolant fluid to flow via the coolant distribution ducts 40 through the cooling channels 41 (see Fig. 2 for cooling channels 41).

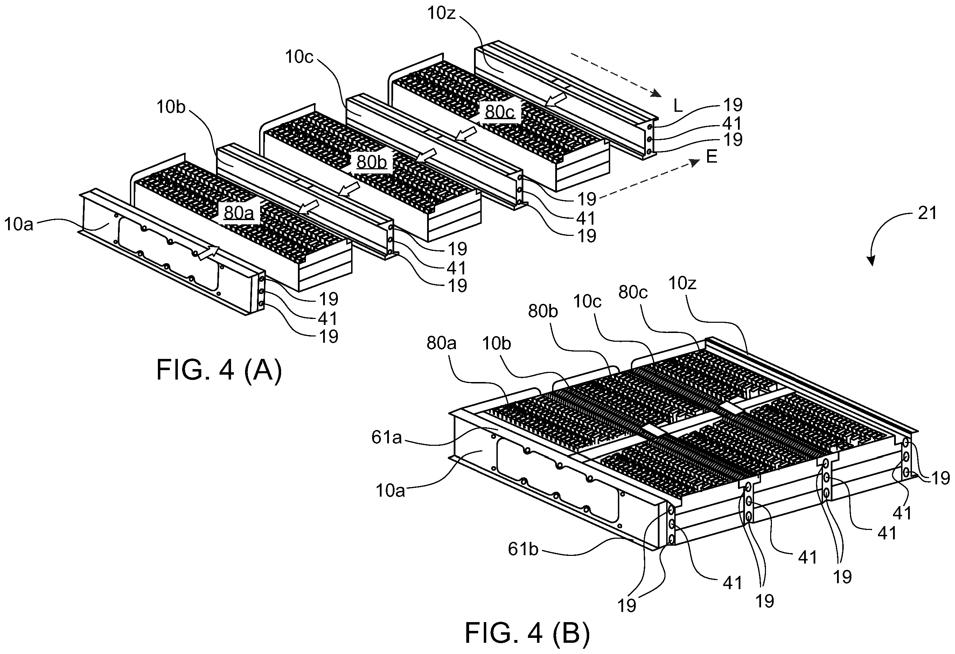

Fig. 4 illustrates a method of assembling the battery pack 100a according to an embodiment. The battery pack 100a is shown in Figs. 1 and 2 and described with reference thereto. Fig.4 is subdivided into four subfigures, Fig. 4 (A), Fig. 4 (B), Fig. 4 (C), and Fig. 4(D) to illustrate different steps of the method. Therein, performing a method step is indicated by one or more arrows with solid lines.

As illustrated in Fig. 4 (A), the plurality of crossbeams 10a, 10b, 10c, 10z and the rows of stacked battery cells 80a, 80b, 80c are provided. The crossbeams 10a, 10b, 10c, 10z and the rows of stacked battery cells 80a, 80b, 80c are stacked such that the inner crossbeams 10b, 10c and the rows of stacked battery cells 80a, 80b, 80c are alternately stacked between the two outer crossbeams 10a, 10z as shown in Fig. 4 (B). The length of the crossbeams 10a, 10b, 10c, 10z, i.e., the elongation of the crossbeams 10a, 10b, 10c, 10z in the longitudinal direction L matches the elongation of the rows of stacked battery cells 80a, 80b, 80c in the longitudinal direction L. The stacked rows of stacked battery cells 80a, 80b, 80c and crossbeams 10a, 10b, 10c, 10z are referred to as cell stack arrangement 21. The cell stack arrangement 21 is compact and has an essentially rectangular cross-section, depending of the dimension of the battery pack 100a which is to be assembled.

Subsequently and as illustrated in Fig. 4 (C), the longitudinal beams 13a, 13b, coolant distribution ducts 40 and fasteners 16 are provided. Once the rows of stacked battery cells 80a, 80b, 80c, are joined with the crossbeams 10a, 10b, 10c, 10z, the battery frame can be closed by longitudinal beams 13a, 13b which will be joined with screw fasteners 16 from the lateral sides. The fasteners 16 comprise screws or bolts, and each of the locking members 19 comprises a hole to receive one of the screws or bolts.

Each of the longitudinal beams 13a, 13b comprises a duct retainer 42 in the form of a recess of the longitudinal beams 13a, 13b to retain one of the coolant distribution ducts 40. The duct retainer 42 is arranged between the openings 20 and extends along the elongation direction E of the longitudinal beams 13a, 13b. The coolant distribution ducts 40 are mechanically connected with the cooling channels 41 of the crossbeams 10a, 10b, 10c, 10z to allow coolant fluid to flow via the coolant distribution ducts 40 through the cooling channels 41 (see Fig. 2 for cooling channels 41). The coolant distribution ducts 40 are arranged in the duct retainers 42 before the fasteners 16.

The two longitudinal beams 13a, 13b and the crossbeams 10a, 10b, 10c 10z are mechanically interconnected with each other by the fasteners 16 extending into the longitudinal direction L of the crossbeams 10a, 10b, 10c, 10z through the openings 20 of the longitudinal beams 13a, 13b and into the locking members 19 of the crossbeams 10a, 10b, 10c, 10z.

Depending on the layout of the battery pack 100a, it is also possible to integrate additional parts, such as sealing plates between the longitudinal beams 13a, 13b and the pre-assembled cell stack arrangement 21.

The resulting battery pack 100a is shown in Fig. 4 (D). Optionally, the battery pack 100a can be closed by a top cover and/or a bottom cover (not shown).

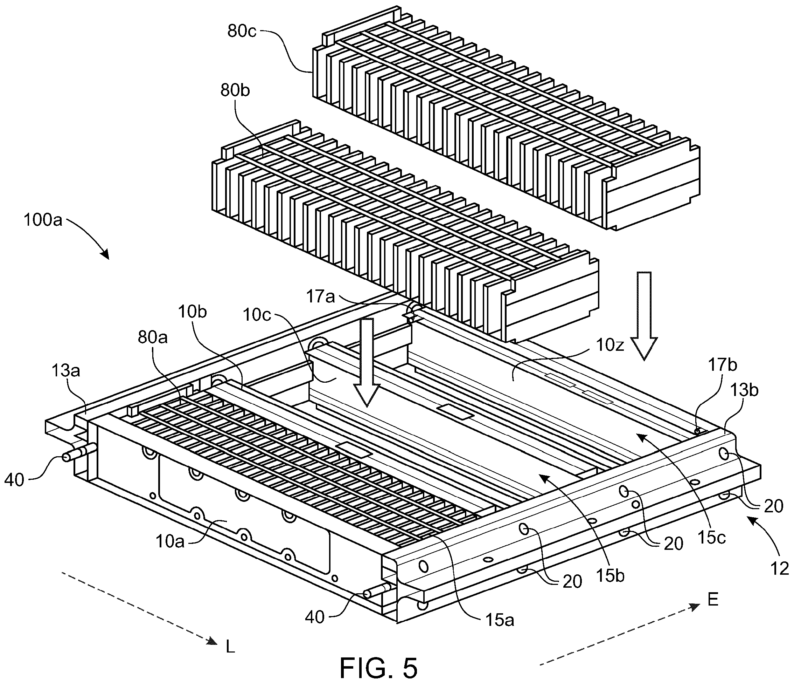

Fig. 5 illustrates a method of assembling a battery pack 100a according to another embodiment. The battery pack 100a is shown in Figs. 1 and 2 and described with reference thereto. In Fig. 5, performing a method step is indicated by a arrow with a solid line.

The method of assembling the battery pack 100a comprises first that a battery frame 12 as described in the present disclosure is provided. Further, the rows of stacked battery cells 80a, 80b, 80c are provided.

One of the rows of stacked battery cells 80a, 80b, 80c is arranged in each of the retaining sections 15a, 15b, 15c provided by the battery frame 12.

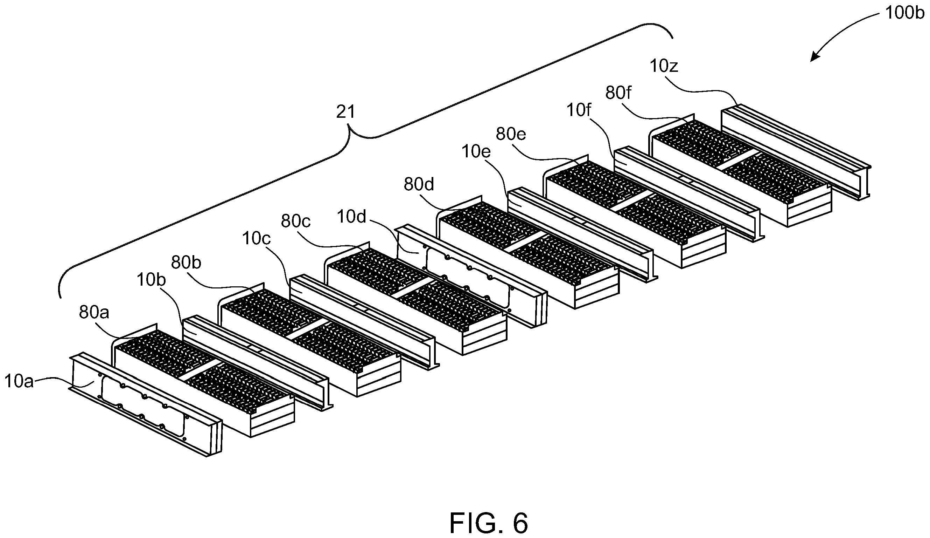

Fig. 6 illustrates a method step of assembling a battery pack 100b according to another embodiment. The method step as shown in Fig. 6 is analogously performed as the method step as illustrated in Fig. 4 (A) with the difference that a different number of crossbeams 10a, 10b, 10c, 10d, 10e, 10f, 10z and a different number of rows of stacked battery cells 80a, 80b, 80c, 80d, 80e, 80f is provided. In this embodiment, the inner crossbeam 10d is of the same type as one of the outer crossbeams 10a, 10z. I.e., due to the modularity of the battery packs 100a, 100b it is possible to assemble a first section of the cell stack arrangement 21, comprising the outer crossbeam 10a, the first role of stacked battery cells 80a, the inner crossbeam 10b, the second row of stacked battery cells 80b, the inner crossbeam 10c, and the third row of stacked battery cells 80c, then to assemble the second sections of the cell stack arrangement 21, comprising the fourth row of stacked battery cells 80d, the inner crossbeam 10e, the fifth row of stacked battery cells 80e, the inner crossbeam 10f, the sixth row of stacked battery cells 80f and the outer crossbeam 10z. The first and second sections of the cell stack arrangement 21 are assembled and joined together by the intermediate crossbeam 10d, which serves as an outer crossbeam for each of the sections of the cell stack arrangement 21.

With that concept installing two times three rows of stacked battery cells 80a, 80b, 80c and 80d, 80e, 80f and two sets of crossbeams 10a, 10b, 10c and 10e, 10f, 10z create a battery pack 100b with double size and capacity, compared to the battery pack 100a of Figs. 1 and 2. Only the longitudinal beam 13a, 13b is to be adapted in length. The profile and/or shape of the longitudinal beams 13a, 13b are the same as in the battery pack 100a of Figs. 1, 2 and 4. A further possibility to change the capacity, current or voltage of a battery pack 100a, 100b is, additionally or alternatively, to install longer or shorter rows of stacked battery cells 80a, 80b, 80c, 80d, 80e, 80f. Therein, the length of the crossbeams 10a, 10b, 10c, 10d, 10e, 10f, 10z is to be adapted. However, the assembly process of the battery pack 100a and the equipment needed for manufacture are the same.

The crossbeams 10a, 10b, 10c, 10d, 10e, 10f, 10z and rows of stacked battery cells 80a, 80b, 80c, 80d, 80e, 80f can be analogously assembled to a battery pack 100b as shown in Fig. 4 (B) to Fig. 4 (D) with the difference that two different longitudinal beams 13a, 13b are provided. Specifically, if the width of the rows of stacked battery cells 80a, 80b, 80c, 80d, 80e, 80f in Figs. 4 and 6 equals, the two longitudinal beams 13a, 13b as to be mounted subsequent to the method step of Fig. 6 are longer than the two longitudinal beams 13a, 13b as mounted and shown in Figs. 4 (C) and 4 (D). However, it is also possible to use two pairs of longitudinal beams 13a, 13b instead of one pair of longitudinal beams 13a, 13b. In this case, differently sized battery packs 100b can be provided by using the same longitudinal beams 13a, 13b. Thus, a differently sized battery pack 100b can be provided by the method step as shown in Fig. 6 compared to the battery pack 100a as shown Figs. 1, 2 and 4.

Fig. 7 illustrates a method of assembling a battery pack 100b according to another embodiment. The battery pack 100b is analogously constructed as the battery pack 100a as illustrated in Fig. 1 with the difference that the battery frame 12 is the battery frame as shown in Fig. 3 and described with reference thereto. However, the method of assembly is analogously performed as shown in Fig. 5 and explained with reference thereto, with the difference that the number of rows of stacked battery cells 80a, 80b, 80c, 80d, 80e, 80f is different in the embodiment of Fig. 7 compared to the number of rows of stacked battery cells 80a, 80b, 80c of the battery pack 100a of Fig. 1.

### Reference signs

- 10a, 10z: outer crossbeam
- 10b, 10c, 10d, 10e, 10f: inner crossbeam
- 12: battery frame
- 13a, 13b: longitudinal beam
- 15a, 15b, 15c, 15d, 15e, 15f: retaining section
- 16: fastener
- 17a, 17b: crossbeam end
- 19: locking member
- 20: opening
- 21: cell stack arrangement
- 40: coolant distribution duct
- 41: cooling channel
- 42: duct retainer
- 61a, 61b: flanges
- 62a, 62a: flanges
- 80a, 80b, 80c, 80d, 80e, 80f: rows of stacked battery cells
- 100a, 100b: battery pack

- E: elongation direction
- L: longitudinal direction

## Claims

1. A battery frame (12) for providing structural support for a battery pack (100a, 100b) for retaining rows of stacked battery cells (80a, 80b, 80c, 80d, 80e, 80f), the battery frame (12) comprising:
- two longitudinal beams (13a, 13b) and a plurality of crossbeams (10a, 10b, 10c, 10d, 10e, 10f, 10z) arranged between and connected to the longitudinal beams (13a, 13b); wherein
- the plurality of crossbeams (10a, 10b, 10c, 10d, 10e, 10f, 10z) are arranged in parallel to each other and comprises two outer crossbeams (10a, 10z) and at least one inner crossbeam (10b, 10c, 10d, 10e, 10f), wherein the at least one inner crossbeam (10b, 10c, 10d, 10e, 10f) is arranged between the outer crossbeams (10a, 10z); wherein
- a retaining section (15a, 15b, 15c, 15d, 15e, 15f) for retaining one row of stacked battery cells (80a, 80b, 80c, 80d, 80e, 80f) is provided between any neighboring pair of crossbeams (10a, 10b, 10c, 10d, 10e, 10f, 10z) so that rows of stacked battery cells (80a, 80b, 80c, 80d, 80e, 80f) and the at least one inner crossbeam (10b, 10c, 10d, 10e, 10f) are alternately stackable between the two outer crossbeams (10a, 10z); wherein
- each of the crossbeams (10a, 10b, 10c, 10d, 10e, 10f, 10z) is connected to the two longitudinal beams (13a, 13b) by a plurality of fasteners (16) extending into a longitudinal direction (L) of the crossbeams (10a, 10b, 10c, 10d, 10e, 10f, 10z) through the longitudinal beams (13a, 13b) and into the crossbeams (10a, 10b, 10c, 10d, 10e, 10f, 10z).

2. The battery frame (12) as claimed in claim 1; wherein
- each of the crossbeams (10a, 10b, 10c, 10d, 10e, 10f, 10z) comprises two opposing crossbeam ends (17a, 17b), and each of the crossbeams (10a, 10b, 10c, 10d, 10e, 10f, 10z) comprises at each of the crossbeam ends (17a, 17b) at least one locking member (19) adapted to receive one of the fasteners (16).

3. The battery frame (12) as claimed in claim 2; wherein
- the fasteners (16) comprise screws or bolts, and each of the locking members (19) comprises a hole to receive one of the screws or bolts.

4. The battery frame (12) as claimed in any one of the preceding claims; wherein
- each of the crossbeams (10a, 10b, 10c, 10d, 10e, 10f, 10z) comprises a cooling channel (41) extending along the longitudinal direction (L) through the crossbeam (10a, 10b, 10c, 10d, 10e, 10f, 10z); and
- each of the crossbeams (10a, 10b, 10c, 10d, 10e, 10f, 10z) comprises two opposing crossbeam ends (17a, 17b) and, at each of the crossbeam ends (17a, 17b), two locking members (19) adapted to receive one of the fasteners (16), each; wherein
- at each of the crossbeam ends (17a, 17b), the cooling channel (41) is arranged between the two locking members (19).

5. The battery frame (12) as claimed in any one of the preceding claims; wherein
- the two longitudinal beams (13a, 13b) are arranged in parallel to each other, and each of the two longitudinal beams (13a, 13b) is elongated along an elongation direction (E) being perpendicular to the longitudinal direction (L) of the crossbeams (10a, 10b, 10c, 10d, 10e, 10f, 10z).

6. The battery frame (12) as claimed in any one of the preceding claims; wherein
- the longitudinal beams (13a, 13b) and/or the crossbeams (10a, 10b, 10c, 10d, 10e, 10f, 10z) are extruded aluminum, rolled steel or long fiber reinforced thermoplastics beams.

7. The battery frame (12) as claimed in any one of the preceding claims 1 to 5; wherein
- the crossbeams (10a, 10b, 10c, 10d, 10e, 10f, 10z) are extruded beams;
- wherein the fasteners (16) extend into extruded through holes of the crossbeams (10a, 10b, 10c, 10d, 10e, 10f, 10z) being the locking members (19) of the crossbeams (10a, 10b, 10c, 10d, 10e, 10f, 10z).

8. A battery pack (100a, 100b), comprising:
- at least two rows of stacked battery cells (80a, 80b, 80c, 80d, 80e, 80f) and the battery frame (12) according to any one of claims 1 to 7; wherein
- the number of inner crossbeams (10b, 10c, 10d, 10e, 10f) equals the number of rows of stacked battery cells (80a, 80b, 80c, 80d, 80e, 80f) reduced by one; and wherein
- each of the rows of stacked battery cells (80a, 80b, 80c, 80d, 80e, 80f) is mounted between a pair of adjacent crossbeams (10a, 10b, 10c, 10d, 10e, 10f, 10z).

9. A vehicle using a power source comprising the battery pack (100a, 100b) according to claim 8.

10. A method of assembling a battery frame (12) according to any one of claims 1 to 7, the method comprising the following steps:
- providing the two longitudinal beams (13a, 13b) and the plurality of crossbeams (10a, 10b, 10c, 10d, 10e, 10f, 10z);
- arranging each of the crossbeams (10a, 10b, 10c, 10d, 10e, 10f, 10z) between the longitudinal beams (13a, 13b) so that a retaining section (15a, 15b, 15c, 15d, 15e, 15f) for retaining one row of stacked battery cells (80a, 80b, 80c, 80d, 80e, 80f) is provided between any neighboring pair of crossbeams (10a, 10b, 10c, 10d, 10e, 10f, 10z) so that rows of stacked battery cells (80a, 809b, 80c) and the at least one inner crossbeam (10b, 10c, 10d, 10e, 10f) are alternately stackable between the two outer crossbeams (10a, 10z); and
- mechanically interconnecting the two longitudinal beams (13a, 13b) and the plurality of crossbeams (10a, 10b, 10c, 10d, 10e, 10f, 10z) with each other by a plurality of fasteners (16) extending into a longitudinal direction (L) of the crossbeams (10a, 10b, 10c, 10d, 10e, 10f, 10z) through the longitudinal beams (13a, 13b) and into the crossbeams (10a, 10b, 10c, 10d, 10e, 10f, 10z).

11. A method of assembling a battery pack (100a, 100b) according to claim 8, the method comprises the following steps:
- providing the plurality of crossbeams (10a, 10b, 10c, 10d, 10e, 10f, 10z) and the at least two rows of stacked battery cells (80a, 80b, 80c, 80d, 80e, 80f);
- stacking the plurality of crossbeams (10a, 10b, 10c, 10d, 10e, 10f, 10z) and the at least two rows of stacked battery cells (80a, 80b, 80c, 80d, 80e, 80f) such that the inner crossbeams (10b, 10c, 10d, 10e, 10f) and the at least two rows of stacked battery cells (80a, 80b, 80c, 80d, 80e, 80f) are alternately stacked between the two outer crossbeams (10a, 10z);
- providing the two longitudinal beams (13a, 13b); and
- mechanically interconnecting the two longitudinal beams (13a, 13b) and the plurality of crossbeams (10a, 10b, 10c, 10d, 10e, 10f, 10z) with each other by the plurality of fasteners (16) extending into a longitudinal direction (L) of the crossbeams (10a, 10b, 10c, 10d, 10e, 10f, 10z) through the longitudinal beams (13a, 13b) and into the crossbeams (10a, 10b, 10c, 10d, 10e, 10f, 10z).

12. A method of assembling a battery pack (100a, 100b) according to claim 8, the method comprises the following steps:
- assembling a battery frame (12) using the method of assembling a battery frame (12) according to claim 10;
- providing a plurality of rows of stacked battery cells (80a, 80b, 80c, 80d, 80e, 80f); and
- arranging one of the rows of stacked battery cells (80a, 80b, 80c, 80d, 80e, 80f) in each of the retaining sections (15a, 15b, 15c, 15d, 15e, 15f) provided by the battery frame (12).

13. The method according to claim 11 or 12; wherein
- a first battery pack (100a) and a second battery pack (100b) is assembled; wherein
- the first battery pack (100a) and the second battery pack (100b) are assembled at the same production line; and wherein
- the first battery pack (100a) has a different size compared to the second battery pack (100b).

14. The method as claimed in claim 13; wherein
- the first battery pack (100a) comprises a different number of crossbeams (10a, 10b, 10c, 10d, 10e, 10f, 10z) and longitudinal beams (13a, 13b) with different lengths compared to the crossbeams (10'a, 10'b, 10'c, 10'z) and longitudinal beams (13'a, 13'b) of the second battery pack (100b).

15. The method as claimed in claim 13 or 14; wherein
- the first battery pack (100a) comprises crossbeams (10a, 10b, 10c, 10d, 10e, 10f, 10z) with different lengths compared to the crossbeams (10'a, 10'b, 10'c, 10'z) of the second battery pack (100b).

## Patentansprüche

1. Batterierahmen (12) zum Bereitstellen struktureller Unterstützung für einen Batteriepack (100a, 100b) zum Halten von Reihen gestapelter Batteriezellen (80a, 80b, 80c, 80d, 80e, 80f), wobei der Batterierahmen (12) Folgendes umfasst:
- zwei Längsträger (13a, 13b) und eine Mehrzahl von Querträgern (10a, 10b, 10c, 10d, 10e, 10f, 10z), die zwischen den Längsträgern (13a, 13b) angeordnet und mit diesen verbunden sind; wobei
- die Mehrzahl von Querträgern (10a, 10b, 10c, 10d, 10e, 10f, 10z) parallel zueinander angeordnet ist und zwei äußere Querträger (10a, 10z) und mindestens einen inneren Querträger (10b, 10c, 10d, 10e, 10f) umfasst, wobei der mindestens eine innere Querträger (10b, 10c, 10d, 10e, 10f) zwischen den äußeren Querträgern (10a, 10z) angeordnet ist; wobei
- ein Halteabschnitt (15a, 15b, 15c, 15d, 15e, 15f) zum Halten einer Reihe gestapelter Batteriezellen (80a, 80b, 80c, 80d, 80e, 80f) zwischen jedem benachbarten Paar von Querträgern (10a, 10b, 10c, 10d, 10e, 10f, 10z) bereitgestellt ist, sodass Reihen gestapelter Batteriezellen (80a, 80b, 80c, 80d, 80e, 80f) und der mindestens eine innere Querträger (10b, 10c, 10d, 10e, 10f) abwechselnd zwischen den zwei äußeren Querträgern (10a, 10z) stapelbar sind; wobei
- jeder der Querträger (10a, 10b, 10c, 10d, 10e, 10f, 10z) durch eine Mehrzahl von Befestigungsmitteln (16), die sich in eine Längsrichtung (L) der Querträger (10a, 10b, 10c, 10d, 10e, 10f, 10z) durch die Längsträger (13a, 13b) hindurch und in die Querträger (10a, 10b, 10c, 10d, 10e, 10f, 10z) hinein erstrecken, mit den zwei Längsträgern (13a, 13b) verbunden ist.

2. Batterierahmen (12) nach Anspruch 1; wobei
- jeder der Querträger (10a, 10b, 10c, 10d, 10e, 10f, 10z) zwei gegenüberliegende Querträgerenden (17a, 17b) umfasst und jeder der Querträger (10a, 10b, 10c, 10d, 10e, 10f, 10z) an jedem der Querträgerenden (17a, 17b) mindestens ein Verriegelungselement (19) umfasst, das dazu ausgelegt ist, eines der Befestigungsmittel (16) aufzunehmen.

3. Batterierahmen (12) nach Anspruch 2; wobei
- die Befestigungsmittel (16) Schrauben oder Bolzen umfassen und jedes der Verriegelungselemente (19) ein Loch umfasst, um eine(n) der Schrauben oder Bolzen aufzunehmen.

4. Batterierahmen (12) nach einem der vorangehenden Ansprüche; wobei
- jeder der Querträger (10a, 10b, 10c, 10d, 10e, 10f, 10z) einen Kühlkanal (41) umfasst, der sich entlang der Längsrichtung (L) durch den Querträger (10a, 10b, 10c, 10d, 10e, 10f, 10z) hindurch erstreckt; und
- jeder der Querträger (10a, 10b, 10c, 10d, 10e, 10f, 10z) zwei gegenüberliegende Querträgerenden (17a, 17b) und, an jedem der Querträgerenden (17a, 17b), zwei Verriegelungselemente (19), die dazu ausgelegt sind, jeweils eines der Befestigungsmittel (16) aufzunehmen, umfasst; wobei
- der Kühlkanal (41) an jedem der Querträgerenden (17a, 17b) zwischen den zwei Verriegelungselementen (19) angeordnet ist.

5. Batterierahmen (12) nach einem der vorangehenden Ansprüche; wobei
- die zwei Längsträger (13a, 13b) parallel zueinander angeordnet sind und jeder der zwei Längsträger (13a, 13b) entlang einer Ausdehnungsrichtung (E), die senkrecht zur Längsrichtung (L) der Querträger (10a, 10b, 10c, 10d, 10e, 10f, 10z) ist, lang gestreckt ist.

6. Batterierahmen (12) nach einem der vorangehenden Ansprüche; wobei
- die Längsträger (13a, 13b) und/oder die Querträger (10a, 10b, 10c, 10d, 10e, 10f, 10z) Träger aus stranggepresstem Aluminium, gewalztem Stahl oder langfaserverstärkten Kunststoffen sind.

7. Batterierahmen (12) nach einem der vorangehenden Ansprüche 1 bis 5; wobei
- die Querträger (10a, 10b, 10c, 10d, 10e, 10f, 10z) stranggepresste Träger sind;
- wobei sich die Befestigungsmittel (16) in stranggepresste Durchgangslöcher der Querträger (10a, 10b, 10c, 10d, 10e, 10f, 10z) hinein erstrecken, welche die Verriegelungselemente (19) der Querträger (10a, 10b, 10c, 10d, 10e, 10f, 10z) sind.

8. Batteriepack (100a, 100b), umfassend:
- mindestens zwei Reihen gestapelter Batteriezellen (80a, 80b, 80c, 80d, 80e, 80f) und den Batterierahmen (12) nach einem der Ansprüche 1 bis 7; wobei
- die Anzahl von inneren Querträgern (10b, 10c, 10d, 10e, 10f) gleich der Anzahl von Reihen gestapelter Batteriezellen (80a, 80b, 80c, 80d, 80e, 80f), reduziert um eins, ist; und wobei
- jede der Reihen gestapelter Batteriezellen (80a, 80b, 80c, 80d, 80e, 80f) zwischen einem Paar benachbarter Querträger (10a, 10b, 10c, 10d, 10e, 10f, 10z) montiert ist.

9. Fahrzeug, das eine Energiequelle nutzt, die den Batteriepack (100a, 100b) nach Anspruch 8 umfasst.

10. Verfahren zur Montage eines Batterierahmens (12) nach einem der Ansprüche 1 bis 7, wobei das Verfahren die folgenden Schritte umfasst:
- Bereitstellen der zwei Längsträger (13a, 13b) und der Mehrzahl von Querträgern (10a, 10b, 10c, 10d, 10e, 10f, 10z);
- Anordnen jedes der Querträger (10a, 10b, 10c, 10d, 10e, 10f, 10z) zwischen den Längsträgern (13a, 13b), sodass ein Halteabschnitt (15a, 15b, 15c, 15d, 15e, 15f) zum Halten einer Reihe gestapelter Batteriezellen (80a, 80b, 80c, 80d, 80e, 80f) zwischen jedem benachbarten Paar von Querträgern (10a, 10b, 10c, 10d, 10e, 10f, 10z) bereitgestellt wird, sodass Reihen gestapelter Batteriezellen (80a, 80b, 80c) und der mindestens eine innere Querträger (10b, 10c, 10d, 10e, 10f) abwechselnd zwischen den zwei äußeren Querträgern (10a, 10z) stapelbar sind; und
- mechanisches Miteinanderverbinden der zwei Längsträger (13a, 13b) und der Mehrzahl von Querträgern (10a, 10b, 10c, 10d, 10e, 10f, 10z) mittels einer Mehrzahl von Befestigungsmitteln (16), die sich in eine Längsrichtung (L) der Querträger (10a, 10b, 10c, 10d, 10e, 10f, 10z) durch die Längsträger (13a, 13b) hindurch und in die Querträger (10a, 10b, 10c, 10d, 10e, 10f, 10z) hinein erstrecken.

11. Verfahren zur Montage eines Batteriepacks (100a, 100b) nach Anspruch 8, wobei das Verfahren die folgenden Schritte umfasst:
- Bereitstellen der Mehrzahl von Querträgern (10a, 10b, 10c, 10d, 10e, 10f, 10z) und der mindestens zwei Reihen gestapelter Batteriezellen (80a, 80b, 80c, 80d, 80e, 80f);
Stapeln der Mehrzahl von Querträgern (10a, 10b, 10c, 10d, 10e, 10f, 10z) und der mindestens zwei Reihen gestapelter Batteriezellen (80a, 80b, 80c, 80d, 80e, 80f), sodass die inneren Querträger (10b, 10c, 10d, 10e, 10f) und die mindestens zwei Reihen gestapelter Batteriezellen (80a, 80b, 80c, 80d, 80e, 80f) abwechselnd zwischen den zwei äußeren Querträgern (10a, 10z) gestapelt sind;
- Bereitstellen der zwei Längsträger (13a, 13b); und
- mechanisches Miteinanderverbinden der zwei Längsträger (13a, 13b) und der Mehrzahl von Querträgern (10a, 10b, 10c, 10d, 10e, 10f, 10z) mittels der Mehrzahl von Befestigungsmitteln (16), die sich in eine Längsrichtung (L) der Querträger (10a, 10b, 10c, 10d, 10e, 10f, 10z) durch die Längsträger (13a, 13b) hindurch und in die Querträger (10a, 10b, 10c, 10d, 10e, 10f, 10z) hinein erstrecken.

12. Verfahren zur Montage eines Batteriepacks (100a, 100b) nach Anspruch 8, wobei das Verfahren die folgenden Schritte umfasst:
- Montieren eines Batterierahmens (12) unter Anwendung des Verfahrens zur Montage eines Batterierahmens (12) nach Anspruch 10;
- Bereitstellen einer Mehrzahl von Reihen gestapelter Batteriezellen (80a, 80b, 80c, 80d, 80e, 80f); und
- Anordnen einer der Reihen gestapelter Batteriezellen (80a, 80b, 80c, 80d, 80e, 80f) in jedem der durch den Batterierahmen (12) bereitgestellten Halteabschnitte (15a, 15b, 15c, 15d, 15e, 15f).

13. Verfahren nach Anspruch 11 oder 12; wobei
- ein erster Batteriepack (100a) und ein zweiter Batteriepack (100b) montiert werden; wobei
- der erste Batteriepack (100a) und der zweite Batteriepack (100b) an der gleichen Produktionslinie montiert werden; und wobei
- der erste Batteriepack (100a) - verglichen mit dem zweiten Batteriepack (100b) - eine andere Größe aufweist.

14. Verfahren nach Anspruch 13; wobei
- der erste Batteriepack (100a) eine andere Anzahl von Querträgern (10a, 10b, 10c, 10d, 10e, 10f, 10z) und Längsträgern (13a, 13b) mit anderen Längen - verglichen mit den Querträgern (10'a, 10'b, 10'c, 10'z) und Längsträgern (13'a, 13'b) des zweiten Batteriepacks (100b) - aufweist.

15. Verfahren nach Anspruch 13 oder 14; wobei
- der erste Batteriepack (100a) Querträger (10a, 10b, 10c, 10d, 10e, 10f, 10z) mit anderen Längen - verglichen mit den Querträgern (10'a, 10'b, 10'c, 10'z) des zweiten Batteriepacks (100b) - aufweist.

## Revendications

1. Cadre de batterie (12) pour fournir un support structurel pour un bloc-batterie (100a, 100b) afin de retenir des rangées de cellules de batterie empilées (80a, 80b, 80c, 80d, 80e, 80f), le cadre de batterie (12) comprenant :
- deux poutres longitudinales (13a, 13b) et une pluralité de barres transversales (10a, 10b, 10c, 10d, 10e, 10f, 10z) agencées entre les poutres longitudinales (13a, 13b) et reliées à celles-ci ; dans lequel
- la pluralité de barres transversales (10a, 10b, 10c, 10d, 10e, 10f, 10z) sont agencées parallèlement les unes aux autres et comprennent deux barres transversales externes (10a, 10z) et au moins une barre transversale interne (10b, 10c, 10d, 10e, 10f), dans lequel l'au moins une barre transversale interne (10b, 10c, 10d, 10e, 10f) est agencée entre les barres transversales externes (10a, 10z) ; dans lequel
- une section de retenue (15a, 15b, 15c, 15d, 15e, 15f) pour retenir une rangée de cellules de batterie empilées (80a, 80b, 80c, 80d, 80e, 80f) est fournie entre toute paire voisine de barres transversales (10a, 10b, 10c, 10d, 10e, 10f, 10z) de telle sorte que des rangées de cellules de batterie empilées (80a, 80b, 80c, 80d, 80e, 80f) et l'au moins une barre transversale interne (10b, 10c, 10d, 10e, 10f) peuvent être empilées en alternance entre les deux barres transversales externes (10a, 10z) ; dans lequel
- chacune des barres transversales (10a, 10b, 10c, 10d, 10e, 10f, 10z) est reliée aux deux poutres longitudinales (13a, 13b) par une pluralité d'éléments de fixation (16) s'étendant dans une direction longitudinale (L) des barres transversales (10a, 10b, 10c, 10d, 10e, 10f, 10z) à travers les poutres longitudinales (13a, 13b) et dans les barres transversales (10a, 10b, 10c, 10d, 10e, 10f, 10z).

2. Cadre de batterie (12) selon la revendication 1 ; dans lequel
- chacune des barres transversales (10a, 10b, 10c, 10d, 10e, 10f, 10z) comprend deux extrémités de barre transversale opposées (17a, 17b), et chacune des barres transversales (10a, 10b, 10c, 10d, 10e, 10f, 10z) comprend, à chacune des extrémités de barre transversale opposées (17a, 17b), au moins un élément de verrouillage (19) adapté pour recevoir l'un des d'éléments de fixation (16).

3. Cadre de batterie (12) selon la revendication 2 ; dans lequel
les éléments de fixation (16) comprennent des vis ou des boulons, et chacun des éléments de verrouillage (19) comprend un trou destiné à recevoir l'une des vis ou l'un des boulons.

4. Cadre de batterie (12) selon l'une quelconque des revendications précédentes ;
dans lequel
- chacune des barres transversales (10a, 10b, 10c, 10d, 10e, 10f, 10z) comprend un canal de refroidissement (41) s'étendant le long de la direction longitudinale (L) à travers la barre transversale (10a, 10b, 10c, 10d, 10e, 10f, 10z) ; et
- chacune des barres transversales (10a, 10b, 10c, 10d, 10e, 10f, 10z) comprend deux extrémités de barre transversale opposées (17a, 17b) et, à chacune des extrémités de barre transversale (17a, 17b), deux éléments de verrouillage (19) qui sont chacun adaptés pour recevoir l'un des d'éléments de fixation (16) ; dans lequel
- à chacune des extrémités de barre transversale (17a, 17b), le canal de refroidissement (41) est agencé entre les deux éléments de verrouillage (19).

5. Cadre de batterie (12) selon l'une quelconque des revendications précédentes ; dans lequel
- les deux poutres longitudinales (13a, 13b) sont agencées parallèlement l'une à l'autre, et chacune des deux poutres longitudinales (13a, 13b) est allongée dans une direction d'allongement (E) perpendiculaire à la direction longitudinale (L) des barres transversales (10a, 10b, 10c, 10d, 10e, 10f, 10z).

6. Cadre de batterie (12) selon l'une quelconque des revendications précédentes ; dans lequel
- les poutres longitudinales (13a, 13b) et/ou les barres transversales (10a, 10b, 10c, 10d, 10e, 10f, 10z) sont des poutres en aluminium extrudé, en acier laminé ou en thermoplastique renforcé de fibres longues.

7. Cadre de batterie (12) selon l'une quelconque des revendications 1 à 5 précédentes ;
dans lequel
- les barres transversales (10a, 10b, 10c, 10d, 10e, 10f, 10z) sont des poutres extrudées ;
- dans lequel les éléments de fixation (16) s'étendent dans des trous traversants extrudés des barres transversales (10a, 10b, 10c, 10d, 10e, 10f, 10z) qui sont les éléments de verrouillage (19) des barres transversales (10a, 10b, 10c, 10d, 10e, 10f, 10z).

8. Bloc-batterie (100a, 100b) comprenant :
- au moins deux rangées de cellules de batterie empilées (80a, 80b, 80c, 80d, 80e, 80f) et le cadre de batterie (12) selon l'une quelconque des revendications 1 à 7 ; dans lequel
- le nombre de barres transversales internes (10b, 10c, 10d, 10e, 10f) est égal au nombre de rangées de cellules de batterie empilées (80a, 80b, 80c, 80d, 80e, 80f) réduit d'une unité ; et dans lequel
- chacune des rangées de cellules de batterie empilées (80a, 80b, 80c, 80d, 80e, 80f) est montée entre une paire de barres transversales adjacentes (10a, 10b, 10c, 10d, 10e, 10f, 10z).

9. Véhicule utilisant une source d'énergie comprenant le bloc-batterie (100a, 100b) selon la revendication 8.

10. Procédé d'assemblage d'un cadre de batterie (12) selon l'une quelconque des revendications 1 à 7, le procédé comprenant les étapes suivantes :
- la fourniture des deux poutres longitudinales (13a, 13b) et de la pluralité de barres transversales (10a, 10b, 10c, 10d, 10e, 10f, 10z) ;
- l'agencement de chacune des barres transversales (10a, 10b, 10c, 10d, 10e, 10f, 10z) entre les poutres longitudinales (13a, 13b) de telle sorte qu'une section de retenue (15a, 15b, 15c, 15d, 15e, 15f) pour retenir une rangée de cellules de batterie empilées (80a, 80b, 80c, 80d, 80e, 80f) est fournie entre toute paire voisine de barres transversales (10a, 10b, 10c, 10d, 10e, 10f, 10z) de telle sorte que des rangées de cellules de batterie empilées (80a, 809b, 80c) et l'au moins une barre transversale interne (10b, 10c, 10d, 10e, 10f) peuvent être empilées en alternance entre les deux barres transversales externes (10a, 10z) ; et
- l'interconnexion mécanique des deux poutres longitudinales (13a, 13b) et de la pluralité de barres transversales (10a, 10b, 10c, 10d, 10e, 10f, 10z) les unes avec les autres par une pluralité d'éléments de fixation (16) s'étendant dans une direction longitudinale (L) des barres transversales (10a, 10b, 10c, 10d, 10e, 10f, 10z) à travers les poutres longitudinales (13a, 13b) et dans les barres transversales (10a, 10b, 10c, 10d, 10e, 10f, 10z).

11. Procédé d'assemblage d'un bloc-batterie (100a, 100b) selon la revendication 8, le procédé comprend les étapes suivantes :
- la fourniture de la pluralité de barres transversales (10a, 10b, 10c, 10d, 10e, 10f, 10z) et des au moins deux rangées de cellules de batterie empilées (80a, 80b, 80c, 80d, 80e, 80f) ;
- l'empilement de la pluralité de barres transversales (10a, 10b, 10c, 10d, 10e, 10f, 10z) et des au moins deux rangées de cellules de batterie empilées (80a, 80b, 80c, 80d, 80e, 80f) de telle sorte que les barres transversales internes (10b, 10c, 10d, 10e, 10f) et les au moins deux rangées de cellules de batterie empilées (80a, 80b, 80c, 80d, 80e, 80f) sont empilées en alternance entre les deux barres transversales externes (10a, 10z) ;
- la fourniture des deux poutres longitudinales (13a, 13b) ; et
- l'interconnexion mécanique des deux poutres longitudinales (13a, 13b) et de la pluralité de barres transversales (10a, 10b, 10c, 10d, 10e, 10f, 10z) les unes avec les autres par la pluralité d'éléments de fixation (16) s'étendant dans une direction longitudinale (L) des barres transversales (10a, 10b, 10c, 10d, 10e, 10f, 10z) à travers les poutres longitudinales (13a, 13b) et dans les barres transversales (10a, 10b, 10c, 10d, 10e, 10f, 10z).

12. Procédé d'assemblage d'un bloc-batterie (100a, 100b) selon la revendication 8, le procédé comprenant les étapes suivantes :
- l'assemblage d'un cadre de batterie (12) en utilisant le procédé d'assemblage d'un cadre de batterie (12) selon la revendication 10 ;
- la fourniture d'une pluralité de rangées de cellules de batterie empilées (80a, 80b, 80c, 80d, 80e, 80f) ; et
- l'agencement de l'une des rangées de cellules de batterie empilées (80a, 80b, 80c, 80d, 80e, 80f) dans chacune des sections de retenue (15a, 15b, 15c, 15d, 15e, 15f) fournies par le cadre de batterie (12).

13. Procédé selon la revendication 11 ou 12 ; dans lequel
- un premier bloc-batterie (100a) et un deuxième bloc-batterie (100b) sont assemblés ; dans lequel
- le premier bloc-batterie (100a) et le deuxième bloc-batterie (100b) sont assemblés sur la même chaîne de production ; et dans lequel
- le premier bloc-batterie (100a) a une taille différente par rapport au deuxième bloc-batterie (100b).

14. Procédé selon la revendication 13 ; dans lequel
- le premier bloc-batterie (100a) comprend un nombre différent de barres transversales (10a, 10b, 10c, 10d, 10e, 10f, 10z) et de poutres longitudinales (13a, 13b) avec des longueurs différentes par rapport aux barres transversales (10'a, 10'b, 10'c, 10'z) et aux poutres longitudinales (13'a, 13'b) du deuxième bloc-batterie (100b).

15. Procédé selon la revendication 13 ou 14 ; dans lequel
- le premier bloc-batterie (100a) comprend des barres transversales (10a, 10b, 10c, 10d, 10e, 10f, 10z) avec des longueurs différentes par rapport aux barres transversales (10'a, 10'b, 10'c, 10'z) du deuxième bloc-batterie (100b).
